# EUROPÄISCHE PATENTSCHRIFT

(11) **EP 1 065 426 B1**
(45) Veröffentlichungstag und Bekanntmachung des Hinweises auf die Patenterteilung: **20.12.2006**
(21) Anmeldenummer: 00102023.9
(22) Anmeldetag: 02.02.2000
(51) Int. Cl.: F16L 37/00, H02G 3/06, F16L 5/14

(54) **Anschlussarmatur zum Befestigen von länglichen Körpern**
Connecting device for the fastening of elongated bodies
Dispositif de raccordement pour la fixation d'objets allongés

(30) Priorität: 30.06.1999 DE 29911362 U
(43) Veröffentlichungstag der Anmeldung: 03.01.2001
(73) Patentinhaber: Anton Hummel Verwaltungs GmbH, 79183 Waldkirch (DE)
(72) Erfinder: Bartholomä, Mario, 79297 Winden (DE); Zügel, Fritz, 79183 Waldkirch (DE); Götz, Volker, 79341 Kenzingen (DE); Gerber, Philipp, 79261 Gutach (DE)
(74) Vertreter: Patent- und Rechtsanwaltssozietät Maucher, Börjes & Kollegen

(56) Entgegenhaltungen:
- EP-A- 0 151 272
- DE-A- 4 325 420
- DE-A- 19 629 012
- DE-C- 19 812 079
- US-A- 5 577 776

## Beschreibung

Die Erfindung betrifft eine Anschlußarmatur, auch eine winkel- oder T-förmige Anschlußarmatur, zum Befestigen von länglichen Körpern, beispielsweise von Schläuchen, Wellschläuchen, Rohren, Kabeln oder dergleichen, an einer Öffnung oder einem Durchbruch oder einer Lochung, zum Beispiel in einer Wand eines Gehäuses oder dergleichen, wobei die Anschlußarmatur wenigstens einen Befestigungsvorsprung aufweist, der durch offene Schlitze in Widerlagerzungen aufgeteilt ist, an deren freien Enden radial nach außen vorstehende Haltevorsprünge angeordnet sind, wobei diese Widerlagerzungen beim Einschieben des Befestigungsvorsprunges in die Öffnung, den Durchbruch oder dergleichen Lochung durch deren Lochungsrand radial nach innen verformbar sind und hinter dem Rand in die Halteposition gelangen, in welcher die Haltevorsprünge diesen Rand zumindest teilweise hintergreifen, und wobei mit Abstand zu den Haltevorsprüngen wenigstens ein Anschlag angeordnet ist, der in Gebrauchsstellung an dem dem hintergriffenen Rand der Lochung oder dergleichen gegenüberliegenden Lochungsrand anliegt, und die Anschlußarmatur in ihrem Inneren eine ihr zugehörige axial bewegbare Sperre aufweist, die in Lösepositionen außerhalb des Bereiches der Widerlagerzungen oder Haltevorsprünge und in Gebrauchsstellung zwischen diese eingreifend angeordnet ist und die Haltevorsprünge in dieser Gebrauchsstellung gegen eine radiale Verformung nach innen sperrt.

Eine derartige Anschlußarmatur ist aus DE 198 12 079 C1 bekannt und hat sich bewährt. Dabei müssen allerdings Vorkehrungen getroffen werden, um die Sperre in axialer Richtung in ihre Sperrstellung bewegen zu können. Ferner müssen Maßnahmen getroffen werden, um den Befestigungsvorsprung mit seinen Haltevorsprüngen mit dem Anschlag an dem Rand der Öffnung, des Durchbruches oder dergleichen Lochung zu verspannen.

In einem Ausführungsbeispiel gemäß Fig.9 bis 12 der DE 198 12 079 C1 ist eine Sperre mit radial nach außen durch die Schlitze des Befestigungsvorsprunges ragenden Betätigungsvorsprüngen vorgesehen, welche in eine Ringnut einer Überwurfmutter eingreifen. Diese Ringnut greif t mit ihrem Innengewinde an einem Außengewinde des Befestigungvorsprunges an und kann demgegenüber also verschraubt und durch die Schraubbewegung axial verstellt werden und bildet mit ihrer dem Durchbruch oder dergleichen zugewandten Stirnseite gleichzeitig den Anschlag. Durch das Verschrauben dieser Überwurfmutter wird also die Verspannung an dem Durchbruch bewirkt und gleichzeitig die Sperre axial verschoben.

Dabei müssen also die in axialer Richtung verlaufenden Schlitze in dem Befestigungsvorsprung entsprechend lang sein und außerdem ist diese außenliegende Überwurfmutter oder Schraubhülse frei zugänglich, so daß Unbefugte die Verbindung lockern oder lösen könnten. Ferner ist eine solche Überwurfmutter oder Schraubhülse aufgrund der im Inneren befindlichen Ringnut als aufwendig anzusehen. Schließlich ist auch die Montage erschwert und die radialen Betätigungsvorsprünge der Sperre müssen so elastisch gestaltet sein und ihrerseits an einzelnen Fingern vorgesehen werden, daß sie beim Einschieben in die Überwurfmutter oder Schraubhülse radial genügend weit nachgeben, um in die Ringnut hineinspringen zu können, was neben der Montage auch die Herstellung der Sperre aufwendig macht.

Es besteht deshalb die Aufgabe, eine Anschlußarmatur der eingangs genannten Art zu schaffen, bei welcher der Vorteil erhalten bleibt, daß durch die axiale Verstellbewegung der Sperre in ihre Sperrstellung auch die Verspannung des Anschlages an dem Rand des Durchbruches oder der Lochung bewirkt werden kann, ohne daß aber die Sperre ein oder mehrere radiale Vorsprünge haben muß.

Zur Lösung dieser scheinbar widersprüchlichen Aufgabe ist die eingangs definierte Anschlußarmatur dadurch gekennzeichnet, daß die Sperre ein Außengewinde und der Befestigungsvorsprung ein dazu passendes Innengewinde aufweist, daß an dem Befestigungsvorsprung ein Mitnehmer-Anschlag für die durch eine Schraubbewegung axial in Sperrstellung bewegbare Sperre vorgesehen ist, daß der Befestigungsvorsprung seinerseits ein gegenüber dem Außengewinde der Sperre gegensinniges Außengewinde hat und daß der Befestigungsvorsprung mit seinem Außengewinde in ein Innengewinde eines den Anschlag bildenden oder aufweisenden Gegenstückes paßt oder eingreift.

Auf diese Weise kann die Sperre mittels ihres Außengewindes und eine Schraubbewegung in Sperrstellung gebracht werden, so daß für eine solche Verstellbewegung keine radial vorstehenden Vorsprünge benötigt werden. Beispielsweise kann mit Hilfe eines Hilfswerkzeuges in die Innenöffnung der Sperre oder an ihrer Stirnseite für diese Verschraubbewegung angegriffen werden. Dabei erreicht die Sperre durch die Schraubbewegung den Mitnehmer-Anschlag, so daß eine Fortsetzung der Schraubbewegung in derselben Richtung dann die Zurückziehung des Befestigungsvorsprunges mit seinen Haltevorsprüngen gegen den hintergriffenen Rand des Durchbruches oder der Lochung bewirkt, bis der Rand des Durchbruches oder der Lochung beidseits zwischen den Haltevorsprüngen und dem Anschlag eingeklemmt ist. Somit kann einerseits die Verspannung an dem Durchbruch sehr leicht bewirkt und gleichzeitig automatisch eine Anpassung an unterschiedlich dicke Wandstärken in diesem Durchbruch-Bereich erzielt werden. Gleichzeitig stellt die Sperre ein relativ einfaches und demgemäß auch preiswertes Teil dar, weil sie keine Axialschlitze und radial vorstehende Vorsprünge benötigt.

Besonders zweckmäßig ist es, wenn die Sperre mittels eines in ihre Innenöffnung passenden und einführbaren Hilfswerkzeuges verdrehbar und dadurch verschraubbar und axial bewegbar ist. Die Innenöffnung der Sperre ist gut zugänglich, so daß eine solche Gestaltung, bei welcher ein Hilfswerkzeug in diese Innenöffnung paßt, die Montage auf einfache Weise erleichtert.

Dabei kann die Sperre eine Hülse sein, die an ihrer Außenseite das Außengewinde trägt. Eine solche Hülse mit Außengewinde kann sehr einfach gefertigt und auch montiert werden und dennoch die erforderliche Sperrwirkung sowie gleichzeitig die Mitnahmewirkung beim Erreichen des Mitnehmer-Anschlages ermöglichen.

Eine mögliche Ausgestaltung der Anschlußarmatur kann dabei darin bestehen, daß die Sperre an ihrer Innenseite über wenigstens einen Teil ihrer axialen Länge eine von einer kreisrunden Form abweichende Innenkontur oder Profilierung für den Angriff eines verdreh- oder verschwenkbaren Hilfswerkzeuges, insbesondere einen Innenmehrkant oder Innensechskant für einen Imbusschlüssel aufweist. Imbusschlüssel sind gängige Werkzeuge, so daß die Anpassung der Hülse daran die Montage weiter erleichtert, weil ein spezielles Hilfswerkzeug nicht zusätzlich angefertigt werden muß.

Die Anschlußarmatur kann als Hülsenteil mit einer winklig, insbesondere rechtwinklig zu der Öffnung gerichteten Innenlängshöhlung oder als Winkelstück oder als Flanschteil mit einer verschließbaren Öffnung der Innenlängshöhlung ausgebildet sein, wobei der Verschluß des Flanschteiles ein verrastbarer Deckel, zum Beispiel ein Schnappdeckel sein kann.

Dies erleichtert einerseits das Befestigen und Verankern beispielsweise eines Wellschlauches oder auch eines Kabels oder dergleichen länglichen Körpers und macht andererseits die Sperre und deren Innenkontur auf einfache Weise für ein Hilfswerkzeug zugänglich.

Dabei kann die profilierte Innenseite der Sperre von ihren beiden Seiten her für ein Hilfswerkzeug zumindest zeitweilig, nämlich während der Montage, zugänglich sein, so daß je nach Platzverhältnissen die Festlegung und Verankerung von der einen oder der anderen Seite der den Durchbruch aufweisenden Wand erfolgen kann.

Vor allem bei Kombination einzelner oder mehrerer der vorbeschriebenen Merkmale und Maßnahmen ergibt sich eine Anschlußarmatur mit einer in axialer Richtung bewegbaren Sperre zum Festlegen eines Haltevorsprünge aufweisenden Befestigungsvorsprunges, wobei diese Sperre eine einfache Hülse mit einem Außengewinde sein kann, die nach Erreichen eines Mitnehmer-Anschlages durch eine weitere Verdrehung den Befestigungsvorsprung in Drehrichtung mitnimmt, so daß dieser aufgrund seines Außengewindes gegenüber einem Innengewinde eines mit einem Anschlag versehenen Teiles axial gegenüber dem Lochungsrand verspannt werden kann und dadurch eine automatische Anpassung an die Dicke der die Lochung oder den Durchbruch aufweisenden Wandung ermöglicht und ergibt.

Nachstehend sind Ausführungsbeispiele der Erfindung anhand der Zeichnung näher beschrieben. Es zeigt in zum Teil schematisierter Darstellung:
- Fig.1: eine teilweise im Längsschnitt gehaltene, auseinandergezogene Darstellung der Anschlußarmatur mit ihren Einzelteilen vor dem Zusammenfügen und vor dem Einsetzen in einen Durchbruch oder eine Lochung zum Beispiel einer Gehäusewand,
- Fig.2: in schaubildlicher Darstellung die Einzelteile der Anschlußarmatur vor ihrer Montage, wobei eine zu der Anschlußarmatur gehörige Sperre bereits in einen hülsenförmigen Befestigungsvorsprung zumindest teilweise eingeschraubt ist,
- Fig.3: eine teilweise im Längsschnitt dargestellte Seitenansicht der Anschlußarmatur in zusammengesetzter Form vor der Montage, wobei die Sperre innerhalb des Befestigungsvorsprunges noch außer Sperrstellung ist,
- Fig.4: eine Stirnansicht und
- Fig.5: eine Draufsicht der Anschlußarmatur gemäß Fig.3,
- Fig.6: eine teilweise im Längsschnitt gehaltene Seitenansicht der Anschlußarmatur nach ihrer Montage, wobei die Sperre in Sperrstellung und der Befestigungsvorsprung gegen den Lochungsrand und einen Anschlag hin gezogen ist, sowie
- Fig.7: eine der Fig.6 entsprechende Darstellung einer abgewandelten Ausführungsform, bei welcher statt eines Wellschlauches an der Anschlußarmatur ein Kabel mittels einer Kabelverschraubung anbringbar ist.

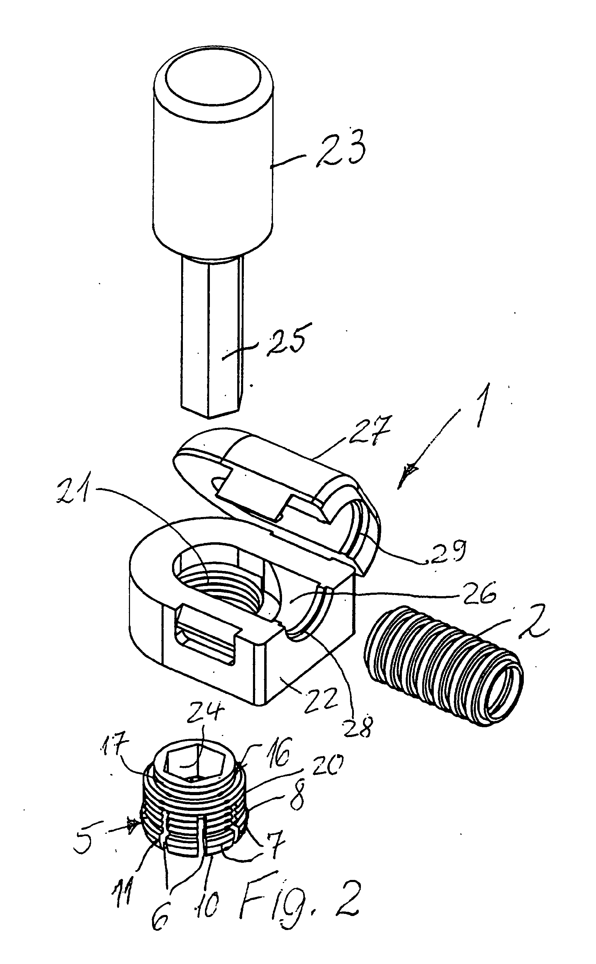

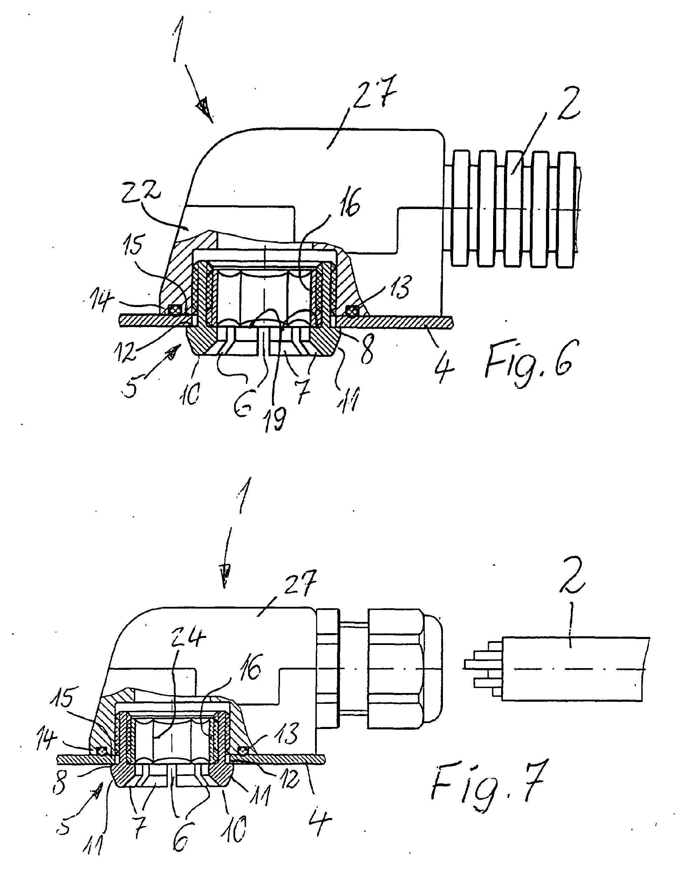

Eine im ganzen mit 1 bezeichnete Anschlußarmatur dient zum Befestigen von länglichen Körpern 2, beispielsweise von Schläuchen oder Wellschläuchen, wie es in den Figuren 2 und 6 angedeutet ist, oder von Kabeln, wie es in Fig.7 dargestellt ist und die demgemäß in der nachfolgenden Beschreibung jeweils mit "2" bezeichnet sind, an einer Öffnung 3 in einer Wand 4 beispielsweise eines Gehäuses oder dergleichen.

Die Anschlußarmatur weist dabei jeweils einen im ganzen mit 5 bezeichneten Befestigungsvorsprung auf, der in Gebrauchsstellung die Öffnung 3 der Wand 4 durchsetzt und mit einem Teil auf der gegenüber dem größeren Teil der Anschlußarmatur 1 auf der anderen Seite der Wand 4 angeordnet ist. Die Öffnung 3 ist dabei in der Regel eine kreisrunde Lochung oder ein vergleichbarer Durchbruch.

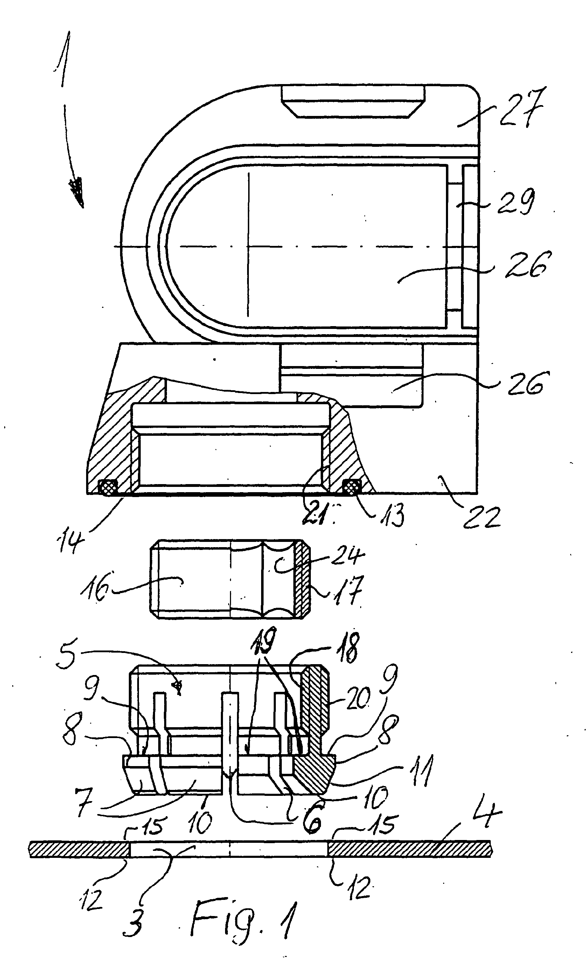

Der Befestigungsvorsprung 5 ist gemäß Fig.1 und 2 durch in axialer Richtung zu seinem freien Ende hin verlaufende und dort offene, auch in radialer Richtung durchgehende Schlitze 6 in mehrere am Umfang gleichmäßig verteilte Widerlagerzungen 7, im folgenden auch kurz "Zungen 7" genannt, aufgeteilt. Am freien Ende dieser Zungen 7, also an dem dem größten Teil der Anschlußarmatur in Gebrauchs- oder Montagestellung abgewandten Ende, weisen diese Zungen 7 radial nach außen vorstehende Haltevorsprünge 8 auf, wobei die Zeichnungsfiguren verdeutlichen, daß dabei diese Vorsprünge 8 von ihrer eigentlichen Rast- und Haltefläche 9 ausgehend zur Stirnseite 10 des Endes dieser Zungen 7 noch einen Abstand haben, das heißt, die Haltevorsprünge 8 haben eine gewisse axiale Ausdehnung. Somit können sie an ihrer Außenseite 11 konisch oder schräg verlaufen, um das Einführen in die Öffnung 3 und ein dadurch bewirktes elastisches Zusammendrücken in radialer Richtung zur Mitte hin zu erleichtern, bis die Rast- und Halteflächen 9 gegenüber dem übrigen Teil der Armatur 1 hinter die Wandung 4 gelangen, um in der dann erreichten Gebrauchsstellung an dem nunmehr hintergriffenen Rand 12 der Öffnung 3 zur Anlage zu kommen.

Dabei ist mit Abstand zu den Haltevorsprüngen 8 und ihren Halteflächen 9 ein in den Ausführungsbeispielen eine Dichtung 13 enthaltender Anschlag 14 vorgesehen, der in Gebrauchsstellung von den Halteflächen 9 einen Abstand hat, welcher der Dicke der Wandung 4 entspricht, so daß dieser Anschlag 14 in Gebrauchsstellung an dem dem hintergriffenen Rand 12 der Öffnung 3 gegenüberliegenden Lochungsrand 15 anliegt, wie es in den Figuren 6 und 7 dargestellt ist.

Gemäß den Figuren 5 und 6 sind die aufgrund ihres Werkstoffes federelastisch verschwenkbaren Widerlagerzungen 7 und die demgegenüber radial vorstehenden Halte- oder Rastvorsprünge 8 so geformt und bemessen, daß sie nach dem Einschieben in den Durchbruch oder die Öffnung 3 mit ihren Rast- und Halteflächen 9 an dem Rand 12 einrasten.

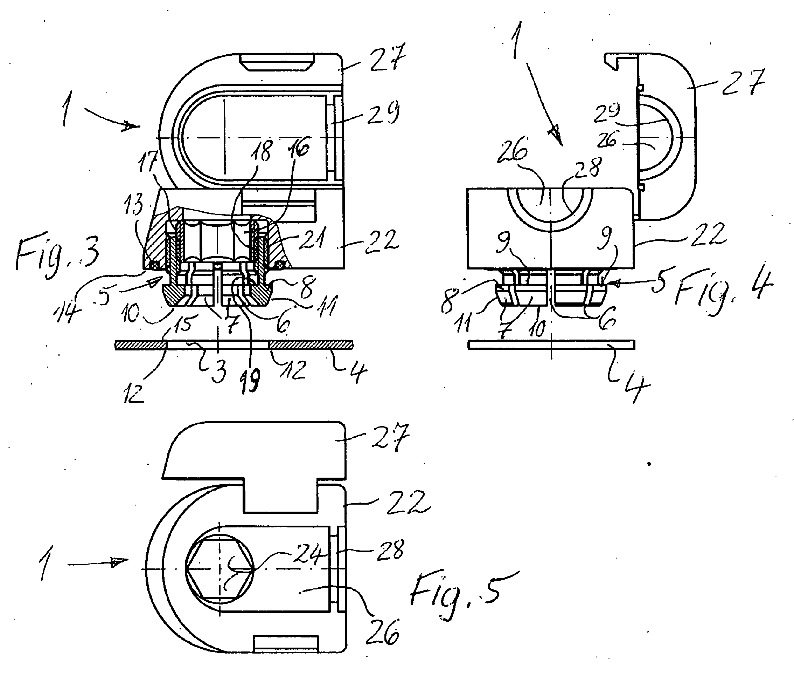

Damit diese Befestigung nicht ungewollt oder aufgrund dynamischer Belastungen gelöst werden kann, weist die Anschlußarmatur 1 eine in axialer Richtung bewegbare Sperre 16 auf, die in Löseposition gemäß Fig.3 bis 5 außerhalb des Bereiches der Zungen 7 und der Haltevorsprünge 8 und in Gebrauchsstellung gemäß der Figuren 6 und 7 zwischen diese eingreifend angeordnet ist, wobei sie von der erstgenannten Löseposition in die Sperrposition in noch zu beschreibender Weise in axialer Richtung bewegt wird. In dieser Sperrposition sperrt sie die Zungen 7 gegen eine radial nach innen gerichtete Verformung oder Verschwenkung, wobei sie sie außerdem bei dieser Sperrbewegung radial auch noch weiter nach außen verschwenken und verformen kann, falls bei der ersten Verrastung die Haltelage noch nicht richtig eingenommen wurde. Die Sperre 16 bringt also die Haltevorsprünge 8 in die endgültige Halteposition, in der die Rast- und Halteflächen 9 wirksam sind und den Rand 12 der Öffnung 3 in ausreichendem Maße hintergreifen.

Denkbar wäre dabei, daß vor dem Verstellen der Sperre 16 in ihre Sperrstellung die jeweiligen Rast- und Halteflächen 9 der Haltevorsprünge 8 den Rand 12 der Öffnung 3 nur teilweise und in so geringem Maße hintergreifen, daß schon geringfügige in axialer Richtung entgegen der Einsteckrichtung wirkende Kräfte eine solche Verbindung wieder lösen können, so daß die Sperre 16 für die endgültige Befestigung auf jeden Fall erforderlich ist, wie es in DE 198 12 079 C1 beschrieben ist.

In den Ausführungsbeispielen gemäß Fig.1 bis 7 liegen die Rast- und Halteflächen 9 in einer sich radial zur Längsmitte erstreckenden Ebene, was eine gute Haltekraft und widerhakenartige Verbindung mit dem Öffnungsrand 12 ergibt. Aufgrund der Sperre 16 wäre es jedoch auch möglich, die Rastflächen 9 der Haltevorsprünge 8 gegenüber einer radial zu der Anschlußarmatur 1 und ihrer Längsmitte verlaufenden Ebene etwas schräg zu gestalten, so daß sie nicht parallel zu der Wandung 4 verlaufen. Die Schrägung könnte dabei von.innen nach außen von den Rändern 12 des Durchbruches 3 weg gerichtet sein, so daß ein von der Innenseite der Lochung 3 weg gerichteter, sich erweiternder Konus gebildet wäre. Auch so könnte eine lösbare Vormontagestellung verwirklicht werden, die durch die Sperre 16 in Gebrauchsstellung gesperrt werden kann.

In den Figuren 2 und 3 ist die Sperre 16 jeweils in einer Löseposition dargestellt, das heißt, sie befindet sich noch außerhalb des Bereiches der Widerlagerzungen 7 und der Haltevorsprünge 8 und erlaubt somit noch das Verrasten mit der Lochung 12.

Dabei erkennt man vor allem in Fig.2, aber auch in Fig.1 und 3, daß die Sperre 16 ein Außengewinde 17 und der als separates hülsenförmiges Teil ausgebildete Befestigungsvorsprung 5 ein dazu passendes Innengewinde 18 aufweist, daß an dem Befestigungsvorsprung 5 innenseitig ein in axialer Richtung wirksamer Mitnehmer-Anschlag 19 für die durch eine Schraubbewegung in Sperrstellung bringbare Sperre 16 vorgesehen ist, daß der Befestigungsvorsprung 5 seinerseits ein gegenüber dem Außengewinde 17 der Sperre 16 gegensinniges Außengewinde 20 hat und daß der Befestigungsvorsprung 5 mit seinem Außengewinde 20 in ein Innengewinde 21 eines den Anschlag 14 bildenden oder aufweisenden Gegenstückes 22 paßt und eingreift.

Zur Befestigung der Anschlußarmatur 1 und des Gegenstückes 22 wird zunächst die Sperre 16 in den Befestigungsvorsprung 5 teilweise eingeschraubt, wie es in Fig.2 dargestellt ist. Danach kann der Befestigungsvorsprung 5 seinerseits in das Gegenstück 22 zunächst teilweise eingeschraubt werden, wonach sich die Anordnung gemäß Fig.3 ergibt. Vor oder nach dem Befestigen eines Wellschlauches oder Kabels 2 kann nun der Befestigungsvorsprung 5 durch die Öffnung oder Lochung 3 hindurchgesteckt und somit an dem Lochungsrand 12 verrastet werden.

Wird anschließend die Sperre 16 durch eine Schraubbewegung tiefer in den Befestigungsvorsprung 5 hineinbewegt und hineingeschraubt, erreicht sie schließlich den Mitnehmer-Anschlag 19, wonach eine radiale Verformung der Haltevorsprünge 8 nicht mehr möglich ist.

Wird die Schraubbewegung fortgesetzt, wird dadurch der Befestigungsvorsprung 5 aufgrund seines gegensinnigen Außengewindes 20 tiefer in das Gegenstück 22 hinein, in Fig.3 also aus der dargestellten Position weiter nach oben, bewegt. Wenn dies nach dem Verrasten mit der Öffnung 3 geschieht, ergibt sich dadurch ein Verspannen mit den Lochungsrändern 12 und 15 und somit auch eine automatische Anpassung an die Dicke der Wand 4. Dabei ist vorteilhaft, daß ein und dieselbe Drehbewegung zum Verschrauben einerseits der Sperre 16 und andererseits des Befestigungsvorsprunges 5 zur Anwendung kommen kann, weil einerseits der Mitnehmer-Anschlag 19 für die Sperre 16 innerhalb des Befestigungsvorsprunges 5 vorhanden und die jeweiligen Gewinde gegensinnig sind.

Die Sperre 16 kann dabei mittels eines in ihre Innenöffnung passenden und einführbaren Hilfswerkzeuges 23 verdrehbar und dadurch verschraubbar und axial bewegbar sein, welches Hilfswerkzeug 23 in Fig.2 angedeutet ist. Dabei ist günstig, daß die Sperre 16 eine Hülse ist, die an ihrer Außenseite das Außengewinde 17 trägt. An ihrer Innenseite weist die Sperre 16 über wenigstens einen Teil ihrer Länge, zweckmäßigerweise über ihre gesamte Länge oder axiale Erstreckung, eine von einer kreisrunden Form abweichende Innenkontur oder Profilierung für den Angriff des verdrehbaren Hilfswerkzeuges 23, im Ausführungsbeispiel gemäß Fig.2 einen Innensechskant 24 für einen entsprechenden Imbusschlüssel, auf. In Fig.2 erkennt man dabei nicht nur den Innensechskant 24 an der Sperre 16, sondern auch den entsprechend dazu passenden Außensechskant 25 an dem Hilfswerkzeug 23. Dabei verdeutlicht Fig.5, daß bei geöffnetem Gegenstück 22 durch dieses hindurch dieser Innensechskant 24 der Sperre 16 für das Hilfswerkzeug 23 und dessen Außensechskant 25 problemlos erreichbar ist. Genausogut kann dieses Hilfswerkzeug 23 aber auch von der entgegengesetzten Seite in die Sperre 16 eingeführt werden, wenn von der der Anschlußarmatur 1 abgewandten Seite der Wand 4 eine entsprechende Zugänglichkeit gegeben ist.

Die Anschlußarmatur 1 kann in unterschiedlicher Weise gestaltet sein, beispielsweise kann sie als Hülsenteil analog der Anschlußarmatur gemäß DE 198 12 079 C1 ausgebildet sein. Im Ausführungsbeispiel ist sie jedoch als Hülsenteil mit einer winklig, insbesondere rechtwinklig zu der Öffnung 3 gerichteten Innenlängshöhlung 26 oder als Winkelstück oder als Flanschteil mit einer verschließbaren Öffnung der Innenlängshöhlung 26 ausgebildet sein, wobei im Ausführungsbeispiel der Verschluß dieses Flanschteiles oder Gegenstückes 22 mit der Innenlängshöhlung 26 ein verrastbarer Deckel 27, zum Beispiel ein Schnappdeckel ist, der in den Figuren 1 bis 5 in Offenstellung und in den Figuren 6 und 7 in der verschlossenen Haltestellung dargestellt ist. Die Innenlängshöhlung dieses Flanschteiles oder Gegenstückes 22 endet dabei mit einer radial nach innen gerichteten Rippe 28, die sich in eine entsprechende Rippe 29 an dem Deckel 27 fortsetzt. Wird der Wellschlauch 2 in die Innenlängshöhlung eingelegt, können die Rippen 28 und 29 in ein Wellental des Wellschlauches eingreifen und diesen in axialer Richtung festlegen, wie es Fig.6 zeigt. Somit hat dieses Flanschteil oder Gegenstück 22 eine Mehrfachfunktion, indem es einerseits den Befestigungsvorsprung 5 und die Dichtung 13 aufnimmt und den Anschlag 14 beim Fixieren des Befestigungsvorsprunges 5 bildet und schließlich den Wellschlauch 2 oder auch ein Kabel oder dergleichen länglichen Körper festlegt und zwar in diesem Falle in einer parallel zur Wandung 4 orientierten Anordnung.

Figur 6 zeigt eine Ausführungsform, bei welcher an dem Flanschteil oder Gegenstück 22 an dessen Ausgang eine Kabelverschraubung etwa gemäß DE 35 19 032 C1 oder gemäß DE 36 40 832 C2 angeordnet ist, um mit der Anschlußarmatur einen als Kabel ausgebildeten länglichen Körper 2 in analoger Weise wie den zuvor beschriebenen Wellschlauch festzulegen.

Die Anschlußarmatur 1 kann also durch die Bewegung der Sperre 16 in deren Sperrstellung auch mit ihrem Befestigungsvorsprung 5 an den Rändern 12 und 15 der Öffnung 3 verspannt und dadurch an unterschiedlich dicke Wandungen 4 angepaßt werden, was alles mit ein und derselben Drehbewegung eines Hilfswerkzeuges 23 zum Verschrauben der Sperre 16 und des Befestigungsvorsprunges 5 erreicht wird. Die Handhabung ist also aufgrund dieser Merkmale und Maßnahmen sehr einfach.

Die Anschlußarmatur 1 zum Befestigen von länglichen Körpern 2 wie Kabeln, Schläuchen oder Rohren an einer Öffnung 3, z.B. in einer Wand 2 eines Gehäuses, weist wenigstens einen Befestigungsvorsprung 5 auf, der durch in radialer und axialer Richtung offene Schlitze 6 in einzelne Widerlagerzungen 7 aufgeteilt ist. Diese haben an ihren Enden radial von der Mitte der Anschlußarmatur 1 weg gerichtete Haltevorsprünge 8. Beim Einschieben des Befestigungsvorsprunges 5 in die Öffnung 3 sind diese Widerlagerzungen 7 radial zur Mitte des Befestigungsvorsprunges 5 hin verbiegbar und gelangen dadurch hinter den Rand 12 der Öffnung 3 in die Halteposition. Mit Abstand zu den Haltevorsprüngen 3 ist wenigstens ein Anschlag 14 angeordnet, der in Gebrauchsstellung an dem dem hintergriffenen Rand 12 der Öffnung 3 gegenüberliegenden Lochungsrand 15 anliegt. Eine Sperre 16, die in Löseposition außerhalb des Bereiches der Widerlagerzungen 7 und in Gebrauchsstellung zwischen diesen deren radiale Verformung sperrend angeordnet ist, hat ein Außengewinde und der Befestigungsvorsprung 5 ein dazu passendes Innengewinde 18. An dem Befestigungsvorsprung 5 ist ein Mitnehmer-Anschlag 19 für die Sperre 16 vorgesehen, an welchem diese bei ihrer Verschraubung in ihre Sperrstellung zur Anlage kommt. Der Befestigungsvorsprung 5 hat außerdem ein gegenüber dem Außengewinde 17 der Sperre 16 gegensinniges Außengewinde 20, welches in ein Innengewinde 21 eines den Anschlag 14 der Anschlußarmatur bildenden Gegenstückes 22 passt, sodaß durch die Bewegung der Sperre 16 in Sperrstellung die Anschlußarmatur 1 mit ihrem Befestigungsvorsprung 5 an der Öffnung 3 verspannt und an unterschiedlich dicke Wandungen 4 angepaßt werden kann.

## Patentansprüche

1. Anschlußarmatur (1), auch winkel- oder T-förmige Anschlußarmatur, zum Befestigen von länglichen Körpern (2), beispielsweise von Schläuchen, Wellschläuchen, Rohren, Kabeln oder dergleichen, an einer Öffnung (3) oder einem Durchbruch oder einer Lochung, zum Beispiel in einer Wand (4) eines Gehäuses oder dergleichen, wobei die Anschlußarmatur (1) wenigstens einen Befestigungsvorsprung (5) aufweist, der durch offene Schlitze (6) in Widerlagerzungen (7) aufgeteilt ist, an deren freien Enden radial nach außen vorstehende Haltevorsprünge (8) angeordnet sind, wobei diese Widerlagerzungen (7) beim Einschieben des Befestigungsvorsprunges (5) in die Öffnung (3), den Durchbruch oder dergleichen Lochung durch deren Lochungsrand (15) radial nach innen verformbar sind und hinter dem Rand (12) in die Halteposition gelangen, in welcher die Haltevorsprünge (8) diesen Rand (12) zumindest teilweise hintergreifen, und wobei mit Abstand zu den Haltevorsprüngen (8) wenigstens ein Anschlag (14) angeordnet ist, der in Gebrauchsstellung an dem dem hintergriffenen Rand (12) der Öffnung (3) oder dergleichen gegenüberliegenden Lochungsrand (15) anliegt, und die Anschlußarmatur (1) in ihrem Inneren eine ihr zugehörige axial bewegbare Sperre (16) aufweist, die in Löseposition außerhalb des Bereiches der Widerlagerzungen (7) oder Haltevorsprünge (8) in dieser Gebrauchsstellung zwischen diese eingreifend angeordnet ist und die Haltevorsprünge (8) in dieser Gebrauchsstellung gegen eine radiale Verformung nach innen sperrt, **dadurch gekennzeichnet, daß** die Sperre (16) ein Außengewinde (17) und der Befestigungsvorprung (5) ein dazu passendes Innengewinde (18) aufweist, daß an dem Befestigungsvorsprung (5) ein Mitnehmer-Anschlag (19) für die durch eine Schraubbewegung in Sperrstellung bewegbare Sperre (16) vorgesehen ist, daß der Befestigungsvorsprung (5) seinerseits ein gegenüber dem Außengewinde (17) der Sperre (16) gegensinniges Außengewinde (20) hat, und daß der Befestigungsvorsprung (5) mit seinem Außengewinde (20) in ein Innengewinde (21) eines den Anschlag (14) bildenden oder aufweisenden Gegenstückes (22) paßt und eingreift.

2. Anschlußarmatur nach Anspruch 1, **dadurch gekennzeichnet, daß** die Sperre (16) mittels eines in ihre Innenöffnung passenden und einführbaren Hilfwerkzeuges (23) verdrehbar und **dadurch** verschraubbar und axial bewegbar ist.

3. Anschlußarmatur nach Anspruch 1 oder 2, **dadurch gekennzeichnet, daß** die Sperre (16) eine Hülse ist, die an ihrer Außenseite das Außengewinde (17) trägt.

4. Anschlußarmatur nach einem der Ansprüche 1 bis 3, **dadurch gekennzeichnet, daß** die Sperre (16) an ihrer Innenseite über wenigstens einen Teil ihrer Länge eine von einer kreisrunden Form abweichende Innenkontur oder Profilierung für den Angriff eines verdrehbaren Hilfwerkzeuges (23), insbesondere einen Innenmehrkant oder Innensechskant (24) für einen Imbusschlüssel aufweist.

5. Anschlußarmatur nach einem der Ansprüche 1 bis 4, **dadurch gekennzeichnet, daß** sie als Hülsenteil mit einer winklig, insbesondere rechtwinklig zu der Öffnung (3) gerichteten Innenlängshöhlung (26) oder als Winkelstück oder als Flanschteil mit einer verschließbaren Öffnung der (26) ausgebildet ist, wobei der Verschluß des Flanschteiles (22) ein verrastbarer Deckel (27), zum Beispiel ein Schnappdeckel, sein kann.

6. Vorrichtung nach einem der Ansprüche 1 bis 5, **dadurch gekennzeichnet, daß** die profilierte Innenseite der Sperre (16) von ihren beiden Seiten her für ein Hilfswerkzeug (23) zugänglich ist.

## Claims

1. Connecting fitting (1), also an angular or T-shaped connecting fitting, for securing elongate bodies (2), for example hoses, corrugated hoses, tubes, cables or the like, in an opening (3) or cut-out or hole, for example in a wall (4) of a housing or the like, the connecting fitting (1) comprising at least one fixing projection (5) which is subdivided by open slots (6) into abutment tongues at whose free ends are arranged radially outwardly protruding retaining projections (8), these abutment tongues (7) being radially inwardly deformable when the fixing projection (5) is pushed into the opening (3), cut-out or similar hole by the edge (15) of said opening and once behind the edge (12) move into the retaining position in which the retaining projections (8) engage at least partially behind this edge (12), and wherein at least one stop (14) is provided at a spacing from the retaining projections (8), said stop abutting, in the position of use, on the edge (15) of the opening which is opposite the engaged edge (12) of the opening (3) or the like, and the connecting fitting (1) having inside it an associated axially movable locking member (16) which in the position of release is arranged outside the range of the abutment tongues (7) or retaining projections (8) while engaging between the latter in this position of use and prevents the retaining projections (8) from undergoing deformation in the radially inward direction in this position of use, **characterised in that** the locking member (16) has an external thread (17) and the fixing projection (5) has a mating internal thread (18), **in that** on the fixing projection (5) is provided a follower stop (19) for the locking member (16) which can be moved into the locking position by a screwing action, **in that** the fixing projection (5) in turn has an external thread (20) which runs in the opposite direction to the external thread (17) of the locking member (16), and **in that** the fixing projection (5) with its external thread (20) fits into and engages an internal thread (21) of a mating part (22) that forms or comprises the stop (14).

2. Connecting fitting according to claim 1, **characterised in that** the locking member (16) can be rotated and thereby tightened and axially moved by means of an auxiliary tool (23) that can be fitted and inserted into its internal opening.

3. Connecting fitting according to claim 1 or 2, **characterised in that** the locking member (16) is a sleeve which carries the external thread (17) on its outside.

4. Connecting fitting according to one of claims 1 to 3, **characterised in that** the locking member (16) comprises on its inside, over at least part of its length, an inner contour or profiling, the shape of which is other than circular, for the engagement of a rotatable auxiliary tool (23), particularly a polygon socket or hexagon socket (24) for a socket wrench.

5. Connecting fitting according to one of claims 1 to 4, **characterised in that** it is constructed as a sleeve member with a longitudinal inner cavity (26) directed at an angle, particularly a right angle, to the opening (3), or as an angle member or flange portion having a closable opening in the longitudinal inner cavity (26), the closure of the flange portion (22) optionally being a latchable cover (27), e.g. a snap-on cover.

6. Device according to one of claims 1 to 5, **characterised in that** the profiled interior of the locking member (16) is accessible from both sides with an auxiliary tool (23).

## Revendications

1. Dispositif de raccordement (1), également dispositif de raccordement en équerre ou en T, pour la fixation de corps oblongs (2), par exemple de tuyaux souples, de tuyaux souples ondulés, de tubes, de câbles ou analogues, sur une ouverture (3) ou un percement ou un trou, par exemple dans une paroi (4) d'un boîtier ou analogue, sachant que le dispositif de raccordement (1) présente au moins une saillie de fixation (5) qui est divisée par des fentes ouvertes (6) en languettes de contre-appui (7) aux extrémités libres desquelles sont disposées des saillies de maintien (8) dépassant radialement vers l'extérieur, sachant que ces languettes de contre-appui (7), lors de l'insertion de la saillie de fixation (5) dans l'ouverture (3), le percement ou autre trou, peuvent être déformées radialement vers l'intérieur par le bord (15) de cette ouverture et parviennent, derrière le bord (12), dans la position de maintien dans laquelle les saillies de maintien (8) engagent au moins partiellement ce bord (12) par l'arrière, et sachant qu'au moins une butée (14) est disposée à distance des saillies de maintien (8), laquelle, en position d'utilisation, s'applique contre le bord (15) de l'ouverture (3) ou analogue qui est opposé au bord (12) de cette ouverture qui est engagé par l'arrière, et que le dispositif de raccordement (1) présente à l'intérieur un élément de blocage (16) axialement mobile qui lui est associé, élément qui est disposé en position de libération en dehors de la région des languettes de contre-appui (7) ou saillies de maintien (8), et en position d'utilisation en engagement entre celles-ci, et qui, dans cette position d'utilisation, bloque les saillies de maintien (8) pour empêcher leur déformation radialement vers l'intérieur, **caractérisé en ce que** l'élément de blocage (16) présente un filetage extérieur (17) et la saillie de fixation (5) un filetage intérieur adapté (18), **en ce qu'**une butée entraîneuse (19) pour l'élément de blocage (16), qui peut être déplacé par un mouvement de vissage en position de blocage, est prévue sur la saillie de fixation (5), **en ce que** la saillie de fixation (5) possède elle-même un filetage extérieur (20) de sens opposé au filetage extérieur (17) de l'élément de blocage (16), et **en ce que** la saillie de fixation (5) s'adapte et s'engage par son filetage extérieur (20) dans un filetage intérieur (21) d'un élément complémentaire (22) constituant ou comportant la butée (14).

2. Dispositif de raccordement selon la revendication 1, **caractérisé en ce que** l'élément de blocage (16) peut, au moyen d'un outil auxiliaire (23) pouvant être introduit de manière adaptée dans son ouverture intérieure, être mis en rotation et ainsi vissé et déplacé axialement.

3. Dispositif de raccordement selon la revendication 1 ou 2, **caractérisé en ce que** l'élément de blocage (16) est une douille qui porte le filetage extérieur (17) sur son côté extérieur.

4. Dispositif de raccordement selon l'une des revendications 1 à 3, **caractérisé en ce que** l'élément de blocage (16) présente sur son côté intérieur, sur au moins une partie de sa longueur, un profilage ou contour intérieur différant d'une forme circulaire et destiné à servir de prise pour un outil auxiliaire rotatif (23), notamment un multipans creux ou un six pans creux (24) pour une clé mâle six pans.

5. Dispositif de raccordement selon l'une des revendications 1 à 4, **caractérisé en ce qu'**il est conçu comme un élément formant douille avec une cavité longitudinale intérieure (26) orientée sous un angle, notamment à angle droit, par rapport à l'ouverture (3), ou comme élément en équerre ou comme élément formant bride avec une ouverture de la cavité longitudinale intérieure (26) qui peut être fermée, sachant que la fermeture de l'élément formant bride (22) peut être un couvercle enclenchable (27), par exemple un couvercle à déclic.

6. Dispositif selon l'une des revendications 1 à 5, **caractérisé en ce que** le côté intérieur profilé de l'élément de blocage (16) est accessible par ses deux côtés pour un outil auxiliaire (23).
